# FASCICULE DE BREVET EUROPEEN

(11) **EP 3 898 308 B1**
(45) Date de publication et mention de la délivrance du brevet: **27.08.2025**
(21) Numéro de dépôt: 19817191.0
(22) Date de dépôt: 03.12.2019
(51) Int. Cl.: B60K 37/00, B62D 25/14, B60K 35/22, B60K 37/10, B60K 37/20

(54) **PLANCHE DE BORD MODULABLE**
MODULIERBARES ARMATURENBRETT
ADJUSTABLE DASHBOARD

(30) Priorité: 18.12.2018 FR 1873219
(43) Date de publication de la demande: 27.10.2021
(73) Titulaire: Airbus Atlantic, 17300 Rochefort (FR)
(72) Inventeur: BERGERET, Christian, 31650 SAINT-ORENS DE GAMEVILLE (FR); ANDRIEU, Gilles, 31140 MONTBERON (FR); BRANCO, Alexandre, 31130 PIN-BALMA (FR)
(74) Mandataire: Argyma
(86) Numéro de dépôt international: PCT/EP2019/083388
(87) Numéro de publication internationale: WO 2020/126453

(56) Documents cités:
- FR-A1- 2 939 766
- FR-A1- 2 964 084
- FR-A1- 2 965 248

## Description

### DOMAINE TECHNIQUE DE L'INVENTION

La présente invention concerne le domaine des meubles intérieurs d'un aéronef et concerne plus précisément une planche de bord d'un poste de pilotage d'un avion.

### ETAT DE LA TECHNIQUE

De manière connue, un poste de pilotage d'avion, monté dans une cabine de pilotage, comprend une pluralité de meubles intérieurs permettant de recevoir les différents équipements nécessaires au pilotage de l'avion, tels que des écrans de contrôle et des dispositifs de commande de vol.

Plus précisément, le poste de pilotage comprend, de manière connue, un pylône central, disposé entre les deux sièges destinés au pilote et au co-pilote de l'avion et comprenant généralement le levier de contrôle moteur, deux consoles latérales, disposées de part et d'autre du poste de pilotage et accessibles chacune par le pilote ou le co-pilote, et une planche de bord, s'étendant sensiblement transversalement à l'avant du poste de pilotage. Une telle planche de bord est notamment configurée pour présenter au pilote et au co-pilote les différents écrans d'affichage des données relatives à la navigation.

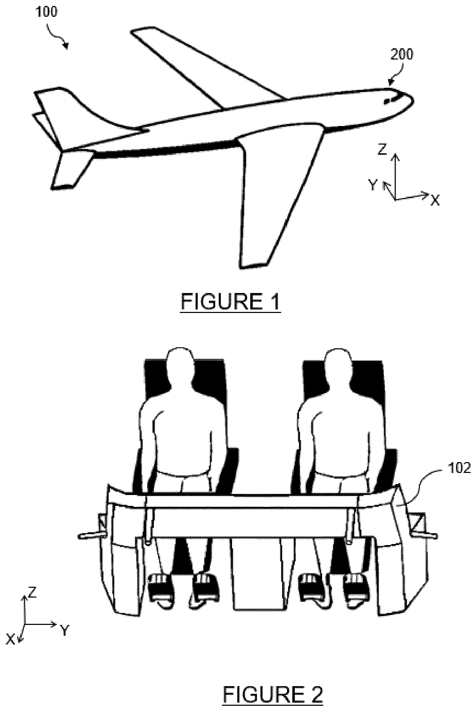

Dans ce document, le terme transversal est défini en référence à la figure 1, dans laquelle, à titre d'exemple, un avion 100 s'étend longitudinalement selon un axe X, latéralement selon un axe Y et verticalement selon un axe Z de manière à former un repère orthogonal (X, Y, Z). Dans un tel repère, le terme « transversal » définit un objet s'étendant suivant la largeur de l'avion 100 dans la plan (Y, Z). De plus, dans un tel repère, l'avant et l'arrière sont définis selon l'axe X en référence au déplacement de l'avion 100 en vol. Autrement dit, toujours en référence à la figure 1, l'avant et l'arrière de l'avion 100, et donc de la cabine de pilotage 200, sont définis selon l'axe X sur la figure 1 qui est orienté de l'arrière vers l'avant.

Selon l'état de l'art, en référence à la figure 2, une planche de bord 102 est un assemblage de pièces et de panneaux métalliques, généralement assemblés par rivetage ou au moyen de boulons. Une telle structure métallique présente l'inconvénient d'être lourde et complexe à manipuler. Aussi, de manière connue, chaque panneau métallique est ajouré de manière à alléger la structure tout en assurant sa rigidité. Cependant, une telle opération, généralement réalisée par usinage, est complexe à mettre en oeuvre et augmente les coûts de fabrication. De plus, un tel ensemble de pièces métalliques présente l'inconvénient de générer de nombreux jeux de montage lors de leur assemblage, ce qui peut entraîner des contraintes importantes dans les pièces et des efforts importants dans les fixations, notamment lorsque celles-ci sont sollicitées, par exemple au décollage de l'avion.

Aussi, il est connu une planche de bord, décrite dans le document FR 2964084 B1, réalisée dans un matériau composite présentant une structure alvéolaire connue sous la désignation « nid d'abeille ». Un tel matériau assure à la fois la rigidité et la légèreté de la structure. La planche de bord décrite dans le document FR 2964084 B1 se présente sous la forme d'un panneau, présentant ainsi une épaisseur réduite et donc un faible encombrement dans la cabine de pilotage. Cependant, une telle planche de bord permet uniquement l'intégration de moniteurs de faible épaisseur, de type écran plat par exemple.

Or, dans un poste de pilotage d'avion, chaque dispositif d'affichage est généralement associé à des moyens de calcul permettant l'analyse des données traitées par le moniteur. De tels moyens de calcul confèrent au dispositif d'affichage des dimensions plus volumineuses que celles d'un écran plat. Cependant, la planche de bord décrite dans le document FR 2964084 B1 permet uniquement l'intégration de dispositifs d'affichage dont les moyens de calcul sont désolidarisés de l'écran. Aussi, une telle planche de bord ne permet pas l'intégration de tout type de moniteur, ce qui présente un inconvénient majeur.

Un des objectifs de la présente invention est de proposer une planche de bord légère, robuste et simple à fabriquer permettant l'intégration de tout type d'écrans d'affichage. Plus particulièrement, la présente invention a pour objet une planche de bord d'un seul tenant configurée pour assurer une modularité des emplacements des équipements de commande et/ou de contrôle de la navigation, tout en limitant le nombre de fixation.

On connait du document FR 2939766A1 un pylône central disposé entre les sièges des deux pilotes et comprenant une coque en matériau composite. Cependant le document FR 2939766A1 ne décrit pas une planche de bord placée devant les sièges de pilotage.

### PRESENTATION DE L'INVENTION

A cet effet, l'invention concerne une planche de bord destinée à être intégrée dans un poste de pilotage d'un aéronef, ladite planche de bord comprenant une structure principale, s'étendant longitudinalement et présentant une forme concave définissant une concavité, ladite concavité étant configurée pour recevoir une pluralité d'équipements de commande et/ou de contrôle de navigation, et au moins une cloison interne, configurée pour délimiter au moins deux logements destinés chacun à recevoir au moins un de ladite pluralité d'équipements de commande et/ou de contrôle de navigation, la planche de bord étant remarquable en que la structure principale est formée d'un seul tenant dans un matériau composite.

Une telle planche de bord réalisée en matériau composite présente l'avantage d'être à la fois plus robuste et plus légère, permettant de limiter le poids des équipements montés dans le poste de pilotage. De plus, une telle planche de bord est plus facile et plus rapide à fabriquer, permettant également une production en série d'une planche de bord type pouvant être intégré à tout poste de pilotage. Une telle fabrication en série permet également de limiter les délais et les coûts de fabrication, puisqu'il n'est pas nécessaire d'usiner chaque panneau après fabrication.

Selon un aspect préféré de l'invention, la planche de bord comprend une pluralité de cloisons internes dont la position dans la concavité est variable suivant les équipements de commande et/ou de contrôle de navigation à installer. Une telle position variable, non prédéfinie, permet avantageusement une planche de bord modulable adaptable à différents types d'avion ou de poste de pilotage. Le positionnement variable de la cloison interne permet également l'intégration de différents types d'équipements présentant par exemple des dimensions différentes.

De manière préférée, ladite au moins une cloison interne est fixée à la structure principale par sur-injection dudit matériau composite, permettant de s'affranchir de l'installation d'éléments supplémentaires de fixation. Une telle fixation permet ainsi de limiter l'apparition de zones faibles dans la structure, c'est à dire de zones pouvant présenter des concentrations de contraintes ou des efforts plus importants par exemple.

De préférence, ladite au moins une cloison interne est formée d'un seul tenant dans ledit matériau composite, permettant une homogénéité de la planche de bord. L'utilisation d'un même matériau pour l'ensemble des cloisons internes et la structure principale permet de limiter les contraintes entre les pièces et de faciliter la fabrication de la planche de bord, permettant un gain de temps et donc une limitation des coûts de fabrication.

Selon un aspect de l'invention, la planche de bord présente de préférence une longueur comprise entre 1600 et 1800 mm, permettant une installation d'une planche de bord type sur différents poste de pilotage, destinés à être montés dans différents types d'avion.

De manière préférée, la planche de bord présente une profondeur comprise entre 100 et 200 mm, permettant une intégration dans la concavité de différents types d'équipements de commande et/ou de contrôle de navigation, incluant ou non des moyens de calcul.

De manière avantageuse, ledit matériau composite est un matériau polymère thermoplastique, permettant de réaliser une planche de bord à la fois légère et robuste et permettant une fabrication rapide par estampage ou thermoformage de matériau polymère.

Selon un aspect de l'invention, la planche de bord comprend un système d'accroche d'un système de ventilation, permettant une intégration rapide et facile du système de ventilation dans le poste de pilotage. Un tel système d'accroche permet en outre une intégration des systèmes de ventilation avant le montage de la planche de bord dans la cabine de pilotage.

De préférence, la structure principale comprend une face arrière, comprenant une pluralité d'ouvertures, configurées pour permettre une circulation d'air à l'intérieur de la concavité et ainsi refroidir la pluralité d'équipements montée à l'intérieur de ladite concavité. De telles ouvertures permettent avantageusement une aération des équipements de commande et/ou de contrôle de navigation logés dans la concavité, permettant de limiter les risques de surchauffe et de dégradation des équipements.

Selon une caractéristique de l'invention, ladite au moins une cloison interne comprend un système de verrouillage d'un de ladite pluralité d'équipements de commande et/ou de contrôle de navigation. Un tel système de verrouillage permet avantageusement de limiter les risques de mouvements de chaque équipement lors des manœuvres de l'avion (par exemple lors du décollage ou de l'atterrissage) ou par exemple au cours de turbulences.

Selon un aspect préféré de l'invention, lesdits au moins deux logements comprennent chacun un système d'alimentation d'un de ladite pluralité d'équipements de commande et/ou de contrôle de navigation. L'intégration directe du système d'alimentation dans chaque logement permet par la suite un gain de temps du montage de chaque équipement sur la planche de bord.

Selon un autre aspect de l'invention, la planche de bord comprend au moins un ressort de rappel, configuré pour maintenir en place un de ladite pluralité d'équipements de commande et/ou de contrôle de navigation dans l'un desdits logements, permettant de limiter tout déplacement de l'équipement.

L'invention concerne également un procédé de fabrication d'une planche de bord telle que décrite précédemment, ledit procédé comprenant :
- une étape de formation d'une structure principale de forme concave d'un seul tenant par thermoformage d'une plaque de matériau composite, et
- une étape de fixation d'au moins une cloison interne à la structure principale de forme concave par sur-injection de matériau composite.

De préférence, le procédé comprend en outre, précédemment à l'étape de fixation de ladite cloison interne, une étape de détourage de la structure principale et de la cloison interne, de manière à les désolidariser de ladite plaque de matériau composite.

De préférence, le procédé comprend en outre une étape de détermination du nombre de logements nécessaires, et une étape de positionnement d'une ou plusieurs cloison(s), de manière à délimiter chaque logement.

De manière préférée, le procédé de fabrication comprend une étape d'intégration d'un système de verrouillage de ladite pluralité d'équipements de commande et/ou de contrôle de navigation.

De préférence, le procédé comprend une étape d'intégration d'un système d'alimentation électrique, pour l'alimentation de ladite pluralité d'équipements de commande et/ou de contrôle de navigation.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La figure 1 est une représentation schématique d'un avion, ainsi qu'un repère de définition d'un tel avion ;
La figure 2 représente schématiquement une planche de bord de l'art antérieur ;
La figure 3 est une représentation schématique d'un poste de pilotage comprenant une planche de bord selon une forme de réalisation de l'invention ;
La figure 4 est une vue de face d'une planche de bord selon un exemple de réalisation de l'invention ;
La figure 5 est une vue arrière de la planche de bord de la figure 4 et
La figure 6 représente les étapes d'un procédé de fabrication d'une planche de bord selon un mode de mise en œuvre de l'invention.

Il faut noter que les figures exposent l'invention de manière détaillée pour mettre en œuvre l'invention, lesdites figures pouvant bien entendu servir à mieux définir l'invention le cas échéant.

### DESCRIPTION DETAILLEE DE L'INVENTION

En référence à la figure 1, il est représenté un avion 100 s'étendant longitudinalement selon un axe X orienté d'arrière en avant, latéralement selon un axe Y orienté de la droite vers la gauche et verticalement selon un axe Z orienté du bas vers le haut de manière à former un repère orthogonal (X, Y, Z). Dans un tel repère, le terme « horizontal » définit un objet s'étendant dans le plan (X, Y) et le terme « transversal », un objet s'étendant dans le plan (Y, Z).

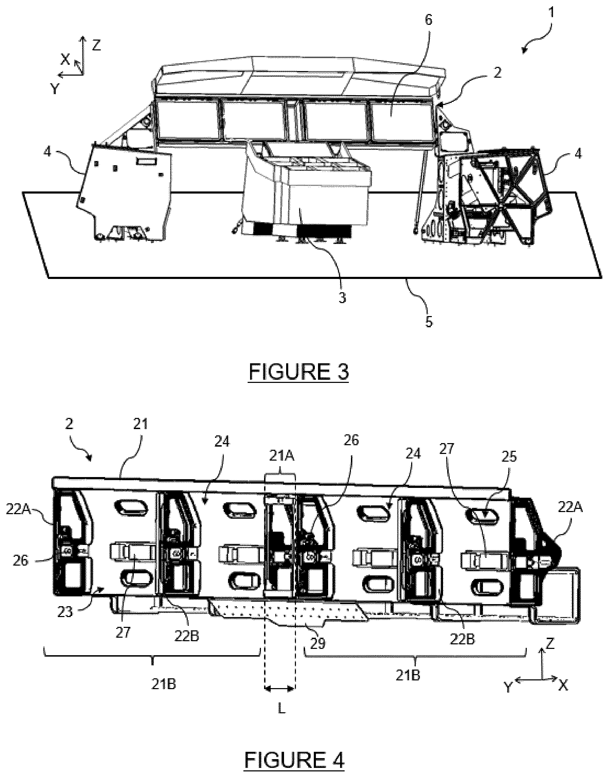

De manière connue, l'avion 100 comporte à l'avant une cabine de pilotage 200, délimitant la portion de fuselage située à l'avant de l'avion 100 et dans laquelle se trouve le pilote et le co-pilote. La cabine de pilotage 200 comporte une ossature structurelle configurée pour recevoir un poste de pilotage 1 (figure 3).

En référence à la figure 3, il est représenté un poste de pilotage 1 qui est adapté pour être monté dans la cabine de pilotage 200. Le poste de pilotage 1 comprend l'ensemble des dispositifs nécessaires au pilotage de l'avion 100. Un tel poste de pilotage 1 comprend ainsi une planche de bord 2 selon l'invention, une pluralité de meubles intérieurs et un plancher 5, sur lequel reposent les meubles intérieurs. La pluralité de meubles intérieurs comprend, un pylône central 3, disposé entre les deux sièges destinés au pilote et au co-pilote de l'avion 100 (non représentés), et deux consoles latérales 4, positionnées de part et d'autre du poste de pilotage 1 et accessibles chacune par le pilote ou le co-pilote. Chacun des meubles intérieurs est configuré pour recevoir une pluralité de dispositifs de commande et/ou de contrôle de la navigation de l'avion 100, comme le levier de contrôle moteur (communément désignée manette des gaz), des boutons de commande ou des jauges de contrôle de carburant ou de l'altitude par exemple.

Dans un tel poste de pilotage 1, la planche de bord 2 est configurée pour s'étendre transversalement. Autrement dit, la longueur de la planche de bord 2 s'étend dans la largeur de l'avion 100, suivant l'axe Y de manière à présenter au pilote et au co-pilote un ensemble de dispositifs de commande et/ou de contrôle de vol, par exemple une pluralité de dispositifs d'affichage 6. Dans la suite de ce document, l'avant de la planche de bord 2 définit la surface faisant face au pilote et au co-pilote en vol, c'est-à-dire la face de la planche de bord 2 orientée vers l'arrière de la cabine de pilotage 200 dans l'avion 100. Autrement dit, l'avant et l'arrière de la planche de bord 2 sont inversés par rapport à l'avant et l'arrière du poste de pilotage 1.

Dans cet exemple, la planche de bord 2 selon l'invention est configurée pour être fixée à la fois au plancher 5 et aux meubles intérieurs du poste de pilotage 1. Une telle fixation ne sera pas décrite plus en détail dans ce document.

Selon une forme de réalisation préférée de l'invention, la planche de bord 2 est fabriquée dans un matériau composite, de préférence dans un matériau polymère thermoplastique (de type fibres de verre par exemple), permettant la fabrication d'une planche de bord 2 à la fois légère et robuste. En référence à la figure 4, une telle planche de bord 2 comprend une structure principale 21 et une pluralité de cloisons internes 22, configurées pour délimiter une pluralité de logements 24.

La structure principale 21 est monobloc, c'est-à-dire formée d'un seul tenant, de manière à limiter les jonctions entre plusieurs pièces rapportées, permettant ainsi avantageusement de renforcer la planche de bord 2. Une telle structure monobloc est de préférence de forme concave, délimitant une concavité 23 destinée à recevoir une pluralité d'équipements de commande et/ou de contrôle moteur de l'avion 100 et à les présenter au pilote et/ou au co-pilote. Autrement dit, dans le plan (X, Z) formé dans le repère (X, Y, Z), la concavité 23 présente sensiblement en coupe la forme d'un C, fermé à l'arrière de la planche de bord 2 et ouvert vers l'avant de la planche de bord 2, c'est-à-dire vers l'arrière du poste de pilotage 1, de manière à ce que les équipements puissent faire face au pilote et au co-pilote. Une telle concavité 23 est destinée à recevoir par exemple une pluralité de dispositifs d'affichage 6, présentant des volumes et des profondeurs différents.

En effet, selon un aspect préféré de l'invention, la structure principale 21 présente une longueur, c'est-à-dire une dimension suivant l'axe Y, comprise entre 1600 et 1800 mm, de manière à permettre par exemple l'intégration de dispositifs d'affichage 6 s'étendant suivant des largeurs d'écran différentes. Une telle longueur de la planche de bord 2 permet également avantageusement son installation sur différents postes de pilotage 1 destinés à être montés dans différents types d'avion 100. Aussi, la planche de bord 2 selon l'invention permet une harmonisation et une fabrication en série d'un unique type de planche de bord 2 pour tout type d'avion 100. De même, la profondeur de la concavité 23, c'est-à-dire la dimension suivant l'axe X, est de préférence comprise entre 100 et 200 mm, de manière à permettre avantageusement l'intégration de différents types de dispositifs d'affichage 6, par exemple des écrans plats, des écrans plus profonds ou des écrans incluant ou non des moyens de calcul.

Selon une forme de réalisation préférée de l'invention, une telle structure principale 21 est fabriquée par injection de matériau thermoplastique dans un moule. La fabrication de la structure principale 21 ainsi que de l'ensemble de la planche de bord 2 sera décrite plus en détails dans la suite de ce document.

Afin de permettre l'aération des dispositifs d'affichage 6 montés dans la concavité 23, la structure principale 21 comprend une pluralité d'ouvertures 25, positionnées de préférence sur une face arrière de la planche de bord 2, c'est-à-dire orientée vers l'avant du poste de pilotage 1. De préférence, la structure principale 21 comprend au moins une ouverture 25 par logement 24 destiné à recevoir un équipement de commande et/ou de contrôle moteur de l'avion 100.

En effet, comme décrit précédemment et toujours en référence à la figure 4, afin de délimiter une pluralité de logements 24 dans la concavité 23, la planche de bord 2 suivant l'invention comprend une pluralité de cloisons internes 22. Deux cloisons internes 22 sont positionnées aux extrémités longitudinales de la planche de bord 2 (cloisons internes latérales 22A) et une pluralité de cloisons est placé sur des positions intermédiaires (cloisons internes intermédiaires 22B), délimitant une pluralité de logements 24 destinés chacun à recevoir, dans cet exemple, un dispositif d'affichage 6. Dans l'exemple représenté sur la figure 4, la planche de bord 2 comprend six cloisons internes (deux cloisons internes latérales 22A et quatre cloisons internes intermédiaires 22B), permettant de délimiter quatre logements 24. De telles cloisons internes 22, dont le nombre et le positionnement sont adaptables suivant par exemple le type d'avion 100 dans lequel le poste de pilotage 1 est destiné à être monté ou suivant le type de dispositifs d'affichage 6 installé, permettent avantageusement à la planche de bord 2 selon l'invention d'être modulable et de pouvoir s'adapter à tout type de poste de pilotage 1.

Comme cela est représenté sur la figure 4, l'ensemble des logements 24 présentent de préférence des dimensions similaires, de manière à permettre l'intégration de dispositifs d'affichage 6 identiques. Aussi, lorsque les dispositifs d'affichage 6 ne s'étendent pas sur l'intégralité de la longueur de la structure principale 21, deux cloisons internes 22 peuvent être disposées sur une portion centrale 21A de la structure principale 21 et espacées d'une longueur, désigné espace central L (correspondant à la longueur totale de la structure principale 21 ôtée de la longueur de l'ensemble des dispositifs d'affichage 6). Un tel espace central L permet de répartir équitablement le positionnement des dispositifs d'affichage 6 sur toute la longueur de la planche de bord 2, permettant avantageusement d'équilibrer le poids des dispositifs d'affichage 6 sur le poste de pilotage 1. Un tel équilibre permet ainsi de limiter l'apparition de contraintes locales dues à un surpoids local, tout en assurant des logements 24 présentant des dimensions adéquats pour assurer le maintien latéral des dispositifs d'affichage 6. Un tel espace central L peut ainsi varier par exemple en fonction du type de dispositifs d'affichage 6 installé, permettant avantageusement d'adapter la dimension des logements 24 et donc la planche de bord 2 à tout type de dispositifs d'affichage 6. Une fois l'espace central L délimité, l'ensemble des dispositifs d'affichage 6 est alors équitablement réparti sur deux portions latérales 21B, représentés sur la figure 4.

De manière similaire à la structure principale 21, chaque cloison interne 22 est fabriquée d'un seul tenant dans un matériau composite, de préférence dans un matériau polymère thermoplastique (de type fibre de verre par exemple), permettant la fabrication d'une planche de bord 2 complète à la fois légère et robuste. De préférence encore, l'ensemble des cloisons internes 22 est fabriqué dans le même matériau composite que le matériau utilisé pour la fabrication de la structure principale 21, permettant la fabrication d'une planche de bord 2 homogène.

Selon un aspect préféré de l'invention, chaque cloison interne 22, préalablement détourée et fabriquée, est configurée pour être fixée à la structure principale 21 par sur-injection de matériau composite thermoplastique, identique au matériau utilisé pour la fabrication de la structure principale 21 et des cloisons internes 22. Une telle sur-injection permet de s'affranchir de dispositifs de fixation, de type vis ou insert par exemple, permettant à la fois d'alléger la planche de bord 2, de s'affranchir de jeux de montage entre plusieurs pièces et de limiter les contraintes dues à des efforts de liaison par exemple. Une telle fixation des cloisons internes 22 permet également d'assurer une fabrication et un montage simple et rapide, permettant de limiter les coûts de production, comme cela sera décrit plus en détails dans la suite de ce document.

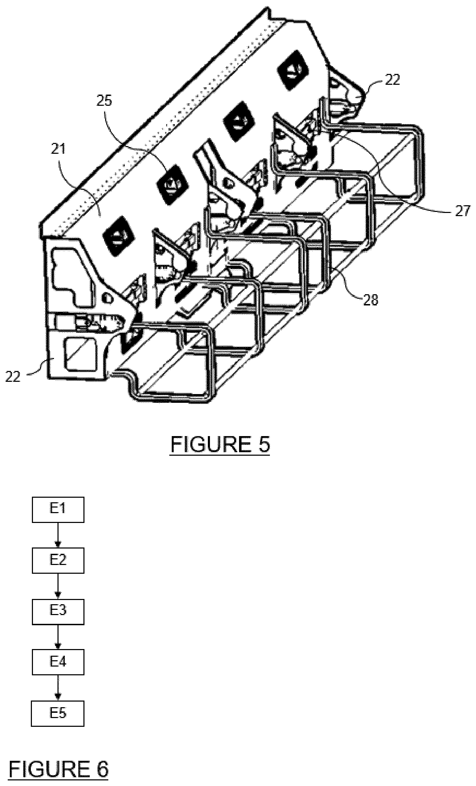

De manière préférée, en référence aux figures 4 et 5, la planche de bord 2 est configurée pour permettre également une intégration simplifiée d'une pluralité de systèmes de verrouillage 26 des dispositifs d'affichage 6 dans chaque logement 24, d'une pluralité de système d'alimentation 27 de chaque dispositif d'affichage 6 et d'un système d'accroche 28 d'un système de ventilation, permettant l'aération de la concavité 23.

En effet, chaque cloison interne 22 est de préférence configurée pour comprendre un système de verrouillage 26 configuré pour maintenir en place le dispositif d'affichage 6 placé dans le logement 24 délimité par ladite cloison interne 22. Un tel système de verrouillage 26 se présente par exemple sous forme d'un pion, faisant saillie latérale de la cloison interne 22 et configuré pour s'insérer dans un orifice de fixation intégré dans le dispositif d'affichage 6. Un tel système de verrouillage 26, pré-intégré à chaque cloison interne 22, permet avantageusement de limiter les temps de montage des équipements dans la planche de bord 2 tout en assurant le positionnement des dispositifs d'affichage 6 dans chaque logement 24, permettant notamment d'éviter tout déplacement lors du décollage de l'avion 100 ou en cas de turbulence. Ce document présente l'exemple de cloisons internes comprenant un unique système de verrouillage 26, cependant il va de soi que chaque cloison interne 22, notamment chaque cloison interne intermédiaire 22B, pourrait comprendre deux systèmes de verrouillage 26, s'étendant de part et d'autre de la cloison interne 22 de manière à permettre la fixation de chaque dispositif d'affichage 6 en deux points de part et d'autre de l'écran.

De plus, de manière optionnelle, la planche de bord 2 comprend une pluralité de ressorts de rappel (non représentés), configurés pour permettre le renforcement du maintien en place de chaque dispositif d'affichage 6, de manière à limiter tout déplacement dans la direction X notamment lors du décollage et de l'atterrissage de l'avion 100. Un tel ressort de rappel, de préférence fixé sur la face arrière à l'intérieur de la concavité 23, se trouve logé à l'intérieur de chaque logement 24, de manière à être positionné en vis-à-vis de chaque dispositif d'affichage 6.

La structure principale 21 comprend en outre, au niveau de chaque logement 24, un système d'alimentation 27 du dispositif d'affichage 6. De préférence, un tel système d'alimentation 27 est fixé sur le fond de la concavité 23, sur la face arrière de la structure principale 21 de manière à permettre une connexion simple de chaque système d'alimentation 27 à un dispositif d'affichage 6 lorsque celui-ci est monté dans le logement 24. Un tel système d'alimentation 27 pré-intégré dans chaque logement 24, permet avantageusement de limiter les temps de montage et de raccordement des équipements dans la planche de bord 2.

Comme cela est représenté sur la figure 5, la planche de bord 2 selon l'invention comprend également un système d'accroche 28 d'un système de ventilation, permettant l'aération de la concavité 23. Un tel système d'accroche 28 se présente dans cet exemple sous la forme d'une pluralité de barres métalliques, s'étendant longitudinalement suivant la longueur de la planche de bord 2, de préférence à l'arrière de la face arrière de la concavité 23, de manière à permettre le passage d'air par les ouvertures 25 décrites précédemment, tout en limitant l'encombrement dans le poste de pilotage 1. Le système de ventilation de la cabine de pilotage 200 est alors configuré pour être inséré dans l'armature formée par l'ensemble de barres métalliques du système d'accroche 28.

Dans cet exemple, le système de verrouillage 26, le système d'alimentation 27 et le système d'accroche 28 sont fixés à la planche de bord 2 au moyen d'insert intégré dans les panneaux composites qui forment la structure principale 21 et chacune des cloisons internes 22. Cependant il va de soi que tout système de fixation, tels que des liaisons boulonnées par exemple, pourrait également être utilisé.

Selon une forme de réalisation de l'invention, en référence à la figure 4, la planche de bord 2 comprend en outre un module de positionnement 29, configuré pour permettre le placement de la planche de bord 2 sur le pylône central 3. Un tel module de positionnement 29, de préférence fabriqué dans un matériau métallique, fait saillie vers l'avant de la planche de bord 2 (c'est-à-dire vers l'arrière du poste de pilotage 1), de manière à reposer sur le pylône central 3. De préférence un tel module de positionnement 29 est fixé à la structure principale 21 de la planche de bord 2 par rivetage. Le module de positionnement 29 selon l'invention permet avantageusement de stabiliser la planche de bord 2 en reposant sur le pylône central 3 via le module de positionnement 29 qui peut en outre comprendre une pluralité d'orifices de fixation, de manière à le fixer au pylône central 3.

Ce document présente l'exemple de l'installation d'une pluralité de dispositifs d'affichage dans chaque logement 24 de la concavité 23, cependant il va de soi que la planche de bord 2 pourrait tout aussi bien être configurée pour recevoir une pluralité d'équipements d'autres types.

Il va dorénavant être décrit, en référence à la figure 6, un procédé de fabrication d'une planche de bord 2 selon un mode de mise en oeuvre préféré de l'invention.

Dans une première étape E1, l'opérateur positionne une plaque de thermoplastique dans une presse, c'est-à-dire dans une machine permettant le formage d'une pièce par estampage, autrement appelé thermoformage. Une telle presse permet la mise en forme à la fois de la structure principale 21, fabriquée d'un seul tenant, et des cloisons internes 22, dont les dimensions ont été prédéterminées. Plus précisément, à titre d'exemple, une plaque de thermoplastique présentant des dimensions assez grandes pour réaliser l'ensemble des pièces structurelles de la planche de bord 2, est positionnée dans une presse hydraulique puis chauffée et pressée de manière à permettre la formation locale du design de la planche de bord 2, permettant par exemple la formation des ouvertures 25 et du relief de la structure principale 21 et des cloisons internes 22. Le matériau composite se solidifie ensuite de manière à conserver la forme de l'empreinte de la presse. Un tel mode de réalisation est connu de l'homme du métier et ne sera pas décrit plus en détails dans ce document.

L'opérateur détoure alors, dans une étape E2, la structure principale 21 ainsi que chaque cloison interne 22 estampées, de manière à désolidariser chaque pièce de la plaque thermoplastique.

L'opérateur détermine ensuite, dans une étape E3, le nombre de logements 24 nécessaires à l'installation de l'ensemble des dispositifs d'affichage 6. Dans cette même étape, l'opérateur détermine à la fois l'espace central L à intégrer à la structure principale 21 et la localisation de chacune des cloisons internes 22 nécessaires, de manière à répartir au mieux le poids de l'ensemble des dispositifs d'affichage 6. Chaque cloison interne 22 comprend en outre de préférence un système de verrouillage 26 pour la fixation d'un dispositif d'affichage 6, un tel système de verrouillage 26 étant préalablement monté lors de la fabrication de chaque cloison interne 22.

Le procédé comprend ensuite une étape E4, au cours de laquelle l'opérateur fixe chaque cloison interne 22 dans la concavité 23 de la structure principale 21. Selon un mode de mise en oeuvre préféré de l'invention, une telle fixation est réalisée par sur-injection de matériau composite, c'est-à-dire en chauffant au niveau de la jonction entre la cloison interne 22 et la structure principale 21 et en réinjectant une quantité prédéterminée du matériau composite utilisé pour la fabrication de la structure principale 21 et de chaque cloison interne 22. Lorsque la jonction refroidit, le matériau se solidifie, fixant la cloison interne 22 dans la concavité 23. Une telle fixation par sur-injection permet avantageusement de limiter les éléments supplémentaires de fixation, permettant de limiter les contraintes locales dans les pièces. Un tel procédé par sur-injection permet également la fabrication d'une planche de bord 2 légère et facilement manipulable sans outillage.

L'opérateur fixe ensuite, dans une étape E5, dans chaque logement 24, un système d'alimentation 27 électrique pour l'alimentation de chaque dispositif d'affichage 6, et un système d'accroche 28 du système de ventilation, pour l'aération de l'ensemble des dispositifs d'affichage 6. Dans cette même étape, l'opérateur fixe également au niveau de chaque logement 24 dans la concavité 23, un ressort de rappel du positionnement d'un dispositif d'affichage 6.

Une fois la planche de bord 2 intégrée dans le poste de pilotage 1, l'opérateur peut ensuite procéder au montage de la pluralité de dispositifs d'affichage 6 dans la concavité 23 de la planche de bord 2, chaque dispositif d'affichage 6 étant monté à l'intérieur de chaque logement 24 délimité par les cloisons internes 22. L'opérateur intègre ainsi un dispositif d'affichage 6 par logement 24 en fixant ce dernier au moyen d'un ou deux système(s) de verrouillage 26, tout en connectant le dispositif d'affichage 6 au système d'alimentation 27.

La planche de bord selon l'invention, permet avantageusement l'utilisation d'une planche de bord légère et robuste et comprenant un nombre limité de fixations. De plus, une telle planche de bord est modulable, permettant une adaptation du nombre et des dimensions de chaque logement, permettant avantageusement d'adapter la configuration de la planche de bord à différents types de poste de pilotage, à différents avion et à différents types d'équipements, notamment différents dispositifs d'affichage présentant des dimensions différentes aussi bien en largeur qu'en profondeur. Une telle planche de bord permet enfin un pré-montage complet de l'ensemble des pièces nécessaires au fonctionnement et à l'intégration des équipements de contrôle et/ou de commande de la navigation, avant son installation dans le poste de pilotage.

## Revendications

1. Planche de bord (2) destinée à être intégrée dans un poste de pilotage (1) d'un aéronef, ladite planche de bord (2) comprenant une structure principale (21), s'étendant longitudinalement et présentant une forme concave définissant une concavité (23), la concavité (23) étant configurée pour s'étendre face à au moins un pilote , ladite concavité (23) étant configurée pour recevoir une pluralité d'équipements de commande et/ou de contrôle de navigation, et au moins une cloison interne (22), configurée pour délimiter au moins deux logements (24) destinés chacun à recevoir au moins un de ladite pluralité d'équipements de commande et/ou de contrôle de navigation, la planche de bord (2) étant caractérisée en que la structure principale (21) est formée d'un seul tenant dans un matériau composite.

2. Planche de bord (2) selon la revendication 1, dans laquelle ladite au moins une cloison interne (22) est fixée à la structure principale (21) par sur-injection dudit matériau composite.

3. Planche de bord (2) selon l'une des revendications 1 et 2, dans laquelle ladite au moins une cloison interne (22) est formée d'un seul tenant dans ledit matériau composite.

4. Planche de bord (2) selon l'une des revendications 1 à 3, dans laquelle ledit matériau composite est un matériau polymère thermoplastique.

5. Planche de bord (2) selon l'une des revendications 1 à 4, comprenant un système d'accroche (28) d'un système de ventilation.

6. Planche de bord (2) selon l'une des revendications 1 à 5, dans laquelle la structure principale (21) comprend une face arrière, comprenant une pluralité d'ouvertures (25), configurées pour permettre une circulation d'air à l'intérieur de la concavité (23) et ainsi refroidir la pluralité d'équipements montée à l'intérieur de ladite concavité (23).

7. Planche de bord (2) selon l'une des revendications 1 à 6, dans laquelle ladite au moins une cloison interne (22) comprend un système de verrouillage (26) d'un de ladite pluralité d'équipements de commande et/ou de contrôle de navigation.

8. Planche de bord (2) selon l'une des revendications 1 à 7, dans laquelle lesdits au moins deux logements (24) comprennent chacun un système d'alimentation (27) d'un de ladite pluralité d'équipements de commande et/ou de contrôle de navigation.

9. Procédé de fabrication d'une planche de bord (2) selon l'une des revendications 1 à 8, ledit procédé comprend :
- une étape de formation (E1) d'une structure principale (21) de forme concave d'un seul tenant par thermoformage d'une plaque de matériau composite, et
- une étape de fixation (E4) d'au moins une cloison interne (22) à la structure principale (21) de forme concave par sur-injection de matériau composite.

10. Procédé de fabrication d'une planche de bord (2) selon la revendication 9, comprenant précédemment à l'étape de fixation (E4) de ladite cloison interne (22), une étape de détourage (E2) de la structure principale (21) et de la cloison interne (22), de manière à les désolidariser de ladite plaque de matériau composite.

## Patentansprüche

1. Armaturenbrett (2) zum Einbau in ein Cockpit (1) eines Flugzeugs, wobei das Armaturenbrett (2) eine Hauptstruktur (21) umfasst, die sich läng erstreckt und eine konkave Form aufweist, die eine Konkavität (23) definiert, wobei die Konkavität (23) ausgelegt ist, um sich gegenüber von mindestens einem Piloten zu erstrecken, wobei die Konkavität (23) ausgelegt ist, um eine Vielzahl von Navigationssteuerungs- und/oder -kontrollausrüstungen aufzunehmen, und mindestens eine innere Trennwand (22), die ausgelegt ist, um mindestens zwei Aufnahmen (24) zu begrenzen, die jeweils zur Aufnahme von mindestens einem von der Vielzahl von Navigationssteuerungs- und/oder -kontrollausrüstungen bestimmt sind, wobei das Armaturenbrett (2) **dadurch gekennzeichnet ist, dass** die Hauptstruktur (21) einteilig aus einem Verbundwerkstoff gebildet ist.

2. Armaturenbrett (2) nach Anspruch 1, wobei die mindestens eine innere Trennwand (22) an der Hauptstruktur (21) durch Aufspritzen des Verbundmaterials befestigt ist.

3. Armaturenbrett (2) nach einem der Ansprüche 1 und 2, wobei die mindestens eine innere Trennwand (22) einteilig aus dem Verbundwerkstoff gebildet ist.

4. Armaturenbrett (2) nach einem der Ansprüche 1 bis 3, wobei das Verbundmaterial ein thermoplastisches Polymermaterial ist.

5. Armaturenbrett (2) nach einem der Ansprüche 1 bis 4, umfassend ein Befestigungssystem (28) für ein Belüftungssystem.

6. Armaturenbrett (2) nach einem der Ansprüche 1 bis 5, wobei die Hauptstruktur (21) eine Rückseite umfasst, die eine Vielzahl von Öffnungen (25) umfasst, die ausgelegt sind, um eine Luftzirkulation innerhalb der Konkavität (23) zu gestatten und so die Vielzahl der in der Konkavität (23) angebrachten Ausrüstungen zu kühlen.

7. Armaturenbrett (2) nach einem der Ansprüche 1 bis 6, wobei die mindestens eine innere Trennwand (22) ein Verriegelungssystem (26) für eine von der Vielzahl von Navigationssteuerungs- und/oder -kontrollausrüstungen umfasst.

8. Armaturenbrett (2) nach einem der Ansprüche 1 bis 7, wobei die mindestens zwei Aufnahmen (24) jeweils ein Versorgungssystem (27) für eine von der Vielzahl von Navigationssteuerungs- und/oder -kontrollausrüstungen umfassen.

9. Verfahren zur Herstellung eines Armaturenbretts (2) nach einem der Ansprüche 1 bis 8, wobei das Verfahren umfasst:
- einen Schritt des Bildens (E1) einer einteiligen konkaven Hauptstruktur (21) durch Thermoformen einer Platte aus Verbundwerkstoff, und
- einen Schritt des Befestigens (E4) mindestens einer inneren Trennwand (22) an der konkaven Hauptstruktur (21) durch Aufspritzen von Verbundwerkstoff.

10. Verfahren zur Herstellung eines Armaturenbretts (2) nach Anspruch 9, das vor dem Befestigungsschritt (E4) der inneren Trennwand (22) einen Schritt des Konturschneidens (E2) der Hauptstruktur (21) und der inneren Trennwand (22) umfasst, um sie von der Verbundmaterialplatte zu trennen.

## Claims

1. An instrument panel (2) for being integrated into a cockpit (1) of an aircraft, said instrument panel (2) comprising a main structure (21), extending longitudinally and having a concave shape defining a concavity (23), the concavity (23) being configured to extend in front of at least one pilot, said concavity (23) being configured to receive a plurality of navigation control and/or monitor pieces of equipment, and at least one inner partition (22), configured to delimit at least two housings (24) each for receiving at least one of said plurality of navigation control and/or monitor pieces of equipment, the instrument panel (2) being **characterized in that** the main structure (21) is formed in one piece from a composite material.

2. The instrument panel (2) according to claim 1, wherein said at least one inner partition (22) is fastened to the main structure (21) by over-injecting said composite material.

3. The instrument panel (2) according to one of claims 1 and 2, wherein said at least one inner partition (22) is formed in one piece in said composite material.

4. The instrument panel (2) according to one of claims 1 to 3, wherein said composite material is a thermoplastic polymeric material.

5. The instrument panel (2) according to one of claims 1 to 4, comprising an attachment system (28) for a ventilation system.

6. The instrument panel (2) according to one of claims 1 to 5, wherein the main structure (21) comprises a rear face, comprising a plurality of openings (25), configured to allow air circulation inside the concavity (23) and thus cool the plurality of pieces of equipment mounted inside said concavity (23).

7. The instrument panel (2) according to one of claims 1 to 6, wherein said at least one inner partition (22) comprises a locking system (26) of one of said plurality of navigation control and/or monitor pieces of equipment.

8. The instrument panel (2) according to one of claims 1 to 7, wherein said at least two housings (24) each comprise a power system (27) of one of said plurality of navigation control and/or monitor pieces of equipment.

9. A method for manufacturing an instrument panel (2) according to one of claims 1 to 8, said method comprises:
- a step of forming (E1) a main concave-shaped structure (21) in one piece by thermoforming a plate of composite material, and
- a step of fastening (E4) at least one inner partition (22) to the main concave-shaped structure (21) by over-injecting composite material.

10. The method for manufacturing an instrument panel (2) according to claim 9, comprising, prior to the step of fastening (E4) said inner partition (22), a step of trimming (E2) the main structure (21) and the inner partition (22), so as to unsecure them from said plate of composite material.
